# EUROPÄISCHE PATENTSCHRIFT

(11) **EP 2 705 279 B1**
(45) Veröffentlichungstag und Bekanntmachung des Hinweises auf die Patenterteilung: **14.03.2018**
(21) Anmeldenummer: 12718080.0
(22) Anmeldetag: 27.04.2012
(51) Int. Cl.: F16H 61/00, F16H 61/688

(54) **HYDRAULIKKREIS, VERFAHREN ZUM BETREIBEN**
HYDRAULIC CIRCUIT, METHOD FOR OPERATING SAME
CIRCUIT HYDRAULIQUE ET SON PROCÉDÉ DE FONCTIONNEMENT

(30) Priorität: 06.05.2011 DE 102011100836
(43) Veröffentlichungstag der Anmeldung: 12.03.2014
(73) Patentinhaber: Audi AG, 85045 Ingolstadt (DE)
(72) Erfinder: SCHULLER, Dietmar, 93336 Altmannstein (DE); FLEISCHMANN, Hans-Peter, 85134 Stammham (DE); HEROLD, Stephan, 85092 Kösching (DE)
(74) Vertreter: Wohnert, Dietmar
(86) Internationale Anmeldenummer: PCT/EP2012/001811
(87) Internationale Veröffentlichungsnummer: WO 2012/152386

(56) Entgegenhaltungen:
- EP-A1- 1 486 693
- WO-A1-2009/111220
- US-A1- 2002 002 878

## Beschreibung

Die Erfindung betrifft ein Doppelkupplungsgetriebe, insbesondere eines Kraftfahrzeugs, mit einem Hydraulikkreis zur Kühlung des Doppelkupplungsgetriebes, der wenigstens eine Pumpe zum Fördern eines Hydraulikmediumstroms, wenigstens einen Kühler zum Kühlen des Hydraulikmediumstroms und ein Volumensteuerventil zum Einstellen des Hydraulikmediumstroms für mindestens eine Kupplungen des Doppelkupplungsgetriebes zugeordnete Kühlung aufweist.

Ferner betrifft die Erfindung ein Verfahren zum Betreiben eines Doppelkupplungsgetriebes, insbesondere wie es oben beschrieben wurde, das einen Hydraulikkreis zur Kühlung des Doppelkupplungsgetriebes aufweist, wobei mittels einer Pumpe ein Hydraulikmediumstrom gefördert und mittels eines Kühlers gekühlt wird, und wobei der Hydraulikmediumstrom für mindestens eine Kupplungen des Doppelkupplungsgetriebes zugeordnete Kühlung mittels eines Volumensteuerventils eingestellt wird.

Doppelkupplungsgetriebe werden bevorzugt in Personenkraftwagen eingesetzt. Ein Doppelkupplungsgetriebe weist im Allgemeinen zwei koaxial zueinander angeordnete Getriebeeingangswellen auf, die jeweils einem Teilgetriebe zugeordnet sind. Jeder der Getriebeeingangswellen ist eine Kupplung zugeordnet, über die die Getriebeeingangswelle des jeweiligen Teilgetriebes kraftschlüssig mit dem Abtrieb eines Motors, vorzugsweise eines Verbrennungsmotors eines Kraftfahrzeugs, gekoppelt werden kann.

Während der Fahrt ist typischerweise eines der Teilgetriebe aktiv, was bedeutet, dass die diesem Teilgetriebe zugeordnete Getriebeeingangswelle über die ihr zugeordnete Kupplung mit dem Motor gekoppelt ist. In dem aktiven Teilgetriebe ist ein Gang eingelegt, der eine momentane Getriebeübersetzung bereitstellt. Eine Steuerung ermittelt, ob abhängig von der Fahrsituation der nächst höhere oder nächst niedrige Gang eingelegt werden soll. Dieser voraussichtlich als nächstes verwendete Gang wird in dem zweiten, inaktiven Teilgetriebe eingelegt. Für einen Gangwechsel wird dann die Kupplung des inaktiven Teilgetriebes geschlossen, während die Kupplung des aktiven Teilgetriebes geöffnet wird. Bevorzugt wird, wenn sich das Öffnen der Kupplung des aktiven Teilgetriebes und das Schließen der Kupplung des inaktiven Teilgetriebes derart überschneiden, dass keine oder nur eine geringfügige Kraftflussunterbrechung vom Motor auf die Antriebswelle des Kraftfahrzeugs gegeben ist. In Folge des Gangwechsels wird das zuvor aktive Teilgetriebe inaktiv, während das zuvor inaktive Teilgetriebe zum aktiven Teilgetriebe wird. Anschließend kann in dem nun inaktiven Teilgetriebe der voraussichtlich als nächstes benötigte Gang eingelegt werden. Im Übrigen ist die Funktionsweise eines Doppelkupplungsgetriebes an sich bekannt, so dass hier nicht näher darauf eingegangen wird.

Üblicherweise wird die Kühlung der Kupplungen durch eine verbrennungsmotorisch angetriebene Konstantpumpe bedient. Für eine bedarfsgerechte Kupplungskühlung wird mindestens ein Steuer- beziehungsweise Regelventil verwendet. Dabei hängt die Genauigkeit des zur Kupplungskühlung benutzten Volumenstroms stark von dem verwendeten Steuer- beziehungsweise Regelventil ab. Üblicherweise wird das durch die Pumpe geförderte Hydraulikmedium durch einen Kühler gekühlt und anschließend einer den Kupplungen zugeordneten Kühlung zugeführt, sodass nur ein Kühlmedium-Volumenstrom für beide Kupplungen zur Verfügung steht. Die gemeinsame Kupplungskühlung verschlechtert dabei die Regelgüte der Kupplungen.

Aus der gattungsgemäßen Offenlegungsschrift WO 2009/111220 A1 ist beispielsweise ein Doppelkupplungsgetriebe bekannt, bei welchem jeder Kupplung eine eigene Kühlung zugeordnet ist. Mittels eines 3/2-Wege-Ventils wird dabei ein Hydraulikmediumstrom entweder der einen oder der anderen Kühlung zugeführt. Ähnliche Vorrichtungen sind aus der EP 1 486 693 A1 und der US 2002/002878 A1 bekannt.

Es ist somit die Aufgabe der Erfindung, Doppelkupplungsgetriebe sowie ein Verfahren zum Betreiben eines Doppelkupplungsgetriebes zu schaffen, die auf einfache und kostengünstige Art und Weise eine Verbesserung der Regelgüte der Kupplungen beziehungsweise eine verbesserte Kupplungskühlung ermöglichen.

Die der Erfindung zugrundeliegende Aufgabe wird durch ein Doppelkupplungsgetriebe mit den Merkmalen des Anspruchs 1 gelöst, wobei das Volumensteuerventil in wenigstens einem ersten Schaltzustand den Hydraulikmediumstrom einer einer ersten der Kupplungen zugeordneten ersten Kühlung und in mindestens einem zweiten Schaltzustand einer einer zweiten der Kupplungen zugeordneten zweiten Kühlung zuführt. Erfindungsgemäß umfasst der Hydraulikkreis somit eine Kühlung für jeweils eine der Kupplungen, wobei das Volumensteuerventil in dem ersten Schaltzustand die ersten Kühlung mit Hydraulikmedium versorgt, und in dem zweiten Schaltzustand die zweite Kühlung. In Zusammenhang mit dem erfindungsgemäßen Gegenstand ist das Volumensteuerventil auch als Volumensteuer- oder -regelventil zu verstehen. Dadurch kann auf einfache Art und Weise bedarfsgerecht die jeweils betroffene Kupplung des Doppelkupplungsgetriebes gekühlt werden. Das Volumensteuerventil stellt zwei getrennte Hydraulikmediumströme für die erste und die zweite Kühlung zur Verfügung. Hierdurch wird die Kühlung der Kupplungen verbessert und die Regelgüte der Kupplungen optimiert. Das Volumensteuerventil kann in einer nicht beanspruchten Fassung als 3/3-Wege-Venil ausgebildet sein und weist dazu drei Anschlüsse auf, von denen einer der Druckseite der Pumpe, und die beiden anderen der Eingangsseite jeweils einer der Kühlungen zugeordnet ist. In dem ersten Schaltzustand wird die Druckseite der Pumpe mit der ersten Kühlung verbunden und die zweite Kühlung bevorzugt blindgeschaltet. In dem zweiten Schaltzustand wird die Druckseite der Pumpe mit der zweiten Kühlung verbunden und die erste Kühlung bevorzugt blindgeschaltet. In dem verbleibenden dritten Schaltzustand wird die Fluidverbindung zwischen der Pumpe und den beiden Kühlungen vollständig unterbrochen. Das nich beanspruchte 3/3-Wege-Ventil konnte als 3/3-Wege-Proportionalventil ausgebildet, sodass der jeweilige Hydraulikmediumstrom variierbar ist. Erfindungsgemäß ist das Volumensteuerventil als 4/3-Wege-Ventil, insbesondere als 4/3-Wege-Proportionalventil ausgebildet. Dies unterscheidet sich von dem zuvor beschriebenen 3/3-Wege-(Proportional)Ventil dahingehend, dass ein weiterer Anschluss vorgesehen ist, der mit einer zu einem das Hydraulikmedium bereitstellenden Tank zurückführenden Leitung verbunden ist. In dem dritten Schaltzustand, in dem die Fluidverbindung zu den Kühlungen unterbrochen ist, sind die zuletzt genannten Anschlüsse fluidtechnisch miteinander verbunden, sodass das von der Pumpe kommende Hydraulikmedium durch die Leitung zurück in den Tank gefördert wird. Dadurch kann beispielsweise ein auf die Druckseite der Pumpe wirkender Staudruck vermieden werden. Gemäß einer bevorzugten Weiterbildung ist vorgesehen, dass in dem ersten Schaltzustand die Druckseite der Pumpe mit der ersten Kühlung verbunden und die zweite Kühlung und die zum Tank führende Leitung bevorzugt blind geschaltet sind, dass in dem zweiten Schaltzustand die Druckseite der Pumpe mit dem Tank beziehungsweise mit der zum Tank zurückführenden Leitung und die erste und die zweite Kühlung bevorzugt blind geschaltet sind, und dass in dem dritten Schaltzustand die Druckseite der Pumpe mit der zweiten Kühlung verbunden und die erste Kühlung sowie die zum Tank zurückführende Leitung blind geschaltet sind. Durch dieses Vertauschen der Schaltstellungen wird erreicht, dass bei einem getakteten Ansteuern des Volumensteuerventils zum Einstellen eines gewünschten Hydraulikmediumstroms für nur eine der Kupplungen zu der anderen Kupplung kein Hydraulikmedium fließt. Stattdessen wird der nicht zu der entsprechenden Kupplung geführte Volumenstrom dem Tank zugeführt. Alternativ, aber nicht beansprucht, ist das Volumensteuerventil als 3/2-WegeVentil, insbesondere 3/2-Wege-Proportionalventil, ausgebildet, wobei in diesem Fall dem Volumensteuerventil bevorzugt ein 3/2-Wege-Schaltventil vorgeschaltet ist, welches bevorzugt in einem ersten Schaltzustand die Druckseite der Pumpe mit dem der Druckseite der Pumpe zugeordneten Anschluss des Volumensteuerventils und in einem zweiten Zustand die Druckseite der Pumpe mit der zu dem Tank zurückführenden Leitung verbindet.

Vorzugsweise ist das Volumensteuerventil elektromotorisch und/oder elektromagnetisch ansteuerbar. Dazu ist dem Volumensteuerventil zweckmäßigerweise ein elektromotorischer und/oder elektromagnetischer Aktor zugeordnet. Hierdurch lässt sich das Volumensteuerventil genau und schnell in den gewünschten Schaltzustand bringen. In einer alternativen Ausführungsform ist dem Volumensteuerventil ein Pilotventil zugeordnet, welches das Volumensteuerventil ansteuert.

Bevorzugt ist die Pumpe durch ein betätigbares Trennelement mit einem Antrieb wirkverbunden beziehungsweise wirkverbindbar. Zweckmäßigerweise ist dazu die Antriebswelle der Pumpe mit einer Abtriebswelle des Antriebs mittels des Trennelements wirkverbunden/wirkverbindbar. Bei dem Trennelement handelt es sich bevorzugt um eine Kupplung oder um einen Freilauf. Durch Betätigen der Kupplung beziehungsweise durch Ändern der Drehrichtung lässt sich die Pumpe abschalten, um das Fördern des Hydraulikmediums zu unterbrechen. Sind die Kupplungen beziehungsweise das im Hydrauliktank befindliche Hydraulikmedium ausreichend kühl, können hierdurch auf einfache Art und Weise eine weitergehende Kühlung und damit einhergehende Energieverluste vermieden werden.

Bevorzugt ist der Antrieb als Elektromotor, insbesondere als drehzahlgeregelter Elektromotor ausgebildet. Die Drehzahl wird zweckmäßigerweise in Abhängigkeit vom Betriebszustand der Kupplungen gewählt. Bei niedrigen Drehzahlen können sehr kleine Volumenströme genau gesteuert werden und bei hohen Drehzahlen große Volumenströme.

Das erfindungsgemäße Verfahren mit den Merkmalen des Anspruchs 5 zeichnet sich dadurch aus, dass in Abhängigkeit vom Betriebszustand des Doppelkupplungsgetriebes, insbesondere der Kupplungen, der Hydraulikmediumstrom einer einer ersten der Kupplungen zugeordneten ersten Kühlung oder einer einer zweiten der Kupplungen zugeordneten zweiten Kühlung zugeführt wird. Hieraus ergeben sich die oben bereits genannten Vorteile. Als Betriebszustand wird dabei bevorzugt die Temperatur der beiden Kupplungen jeweils ermittelt und zweckmäßigerweise mit einem oder mehreren vorgebbaren Schwellwerten verglichen. Überschreitet die Temperatur der ersten Kupplung beispielsweise einen kritischen Schwellwert, so wird der Hydraulikmediumstrom der ersten Kupplung zugeführt, um deren Temperatur zu reduzieren. Entsprechend wird mit der zweiten Kupplung verfahren.

Erreichen beide Kupplungen eine kritische Temperatur, so wird zum im Wesentlichen gleichzeitigen beziehungsweise quasi-gleichzeitigen Bereitstellen des Hydraulikmediumstroms für beide Kupplungen das Volumensteuerventil getaktet angesteuert, sodass es vorteilhafterweise zwischen den ersten und zweiten Schaltzustand in einer bestimmten Frequenz wechselt, um beide Kupplungen mit gekühltem Hydraulikmedium zu versorgen. Vorzugsweise wird die Verweildauer in dem jeweiligen Zustand dem Kühlbedarf der jeweils zugeordneten Kupplung angepasst. Unterschreitet die Temperatur der ersten oder der zweiten Kupplung einen kritischen Wert, so wird bevorzugt der Hydraulikmediumstrom unterbrochen beziehungsweise die Kühlung der jeweiligen Kupplung beendet. Hierdurch wird verhindert, dass die Temperatur der jeweiligen Kupplung weiter in einen ungünstigen Bereich absinkt. Vorzugsweise wird anstelle des getakteten Ansteuerns ein als Proportionalventil ausgebildetes Volumensteuerventil vorgesehen beziehungsweise angesteuert.

Bevorzugt wird die Drehzahl der Pumpe in Abhängigkeit von einer gewünschten Kühlleistung eingestellt, wobei zweckmäßigerweise die Drehzahl für eine hohe Kühlleistung erhöht und für eine niedrige Kühlleistung verringert wird.

Insgesamt wird hierdurch eine hohe Energieeffizienz erreicht. Darüber hinaus wird die Kupplungsregelgüte durch Minimierung der Einflüsse durch die Kupplungskühlung verbessert. Besonders bevorzugt ist der oben beschriebene Hydraulikkreis als Hydraulikteilkreis eines Hydraulikkreises zum Kühlen und Betätigen eines Doppelkupplungsgetriebes ausgebildet.

Im Folgenden wird der erfindungsgemäße Hydraulikkreis anhand der Zeichnung näher erläutert. Dazu zeigen
- Figur 1: ein erstes, schematisches Ausführungsbeispiel eines Hydraulikkreises, und
- Figur 2: ein zweites, nicht beanspruchtes Ausführungsbeispiel des Hydraulikkreises.

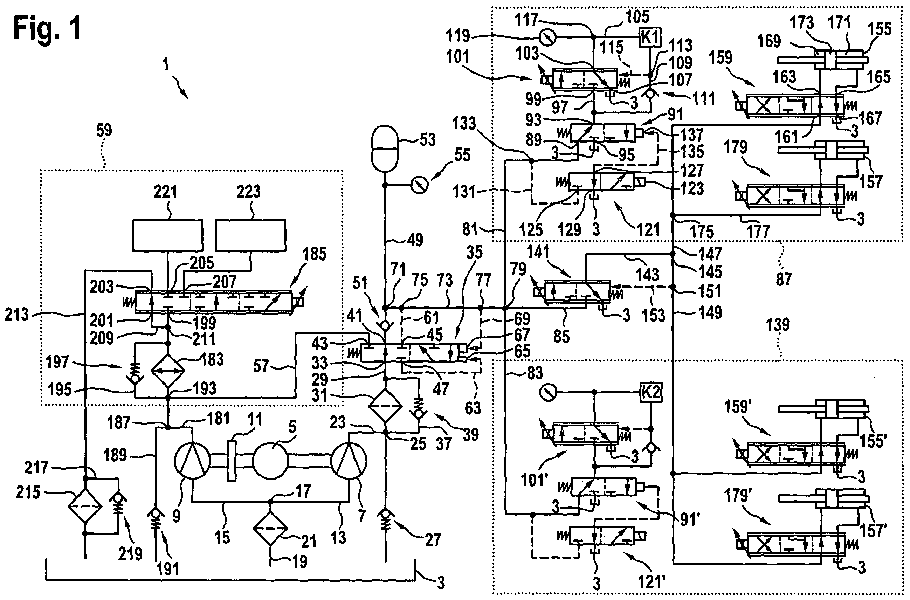

Figur 1 zeigt einen Hydraulikkreis 1, der der Betätigung, insbesondere dem Kuppeln sowie dem Ein- und Auslegen von Gängen, eines Doppelkupplungsgetriebes sowie dessen Kühlung dient. Der Hydraulikkreis 1 umfasst einen Tank 3, der insbesondere als Vorratsbehälter oder Sumpf für ein zur Betätigung und Kühlung verwendetes Hydraulikmedium dient, und in dem das Hydraulikmedium vorzugsweise drucklos gespeichert ist. Es ist ein Elektromotor 5 vorgesehen, der eine erste Pumpe 7 und eine zweite Pumpe 9 antreibt. Der Elektromotor 5 ist bevorzugt bezüglich seiner Drehzahl und Drehrichtung steuerbar, besonders bevorzugt regelbar. Die erste Pumpe 7 ist mit dem Elektromotor 5 fest verbunden, also ohne dass ein Trennelement vorgesehen ist. Dies bedeutet, dass die Pumpe 7 bei laufendem Elektromotor 5 stets angetrieben wird und Hydraulikmedium vorzugsweise in beiden Drehrichtungen gleichgerichtet fördert. Die Pumpe 9 ist über ein Trennelement 11 mit dem Elektromotor 5 verbunden. Es ist also möglich, die Pumpe 9 von dem Elektromotor 5 abzukoppeln, so dass sie nicht läuft, wenn der Elektromotor 5 läuft. Das Trennelement 11 ist vorzugsweise als Kupplung oder als Freilauf ausgebildet, wobei im zweiten Fall über die Drehrichtung des Elektromotors 5 bestimmt werden kann, ob von der Pumpe 9 Hydraulikmedium gefördert wird oder nicht.

Die erste Pumpe 7 und die zweite Pumpe 9 sind jeweils über eine Leitung 13, 15 mit einer Abzweigung 17 verbunden, in die eine weitere Leitung 19 mündet. Diese verbindet den Tank 3 über einen Saugfilter 21 mit der Abzweigung 17. Insgesamt sind damit Einlässe der Pumpen 7, 9 über die Leitungen 13, 15, die Abzweigung 17 und die den Saugfilter 21 aufweisende Leitung 19 mit dem Tank 3 verbunden.

Der Auslass der ersten Pumpe 7 ist mit einer Leitung 23 verbunden, die zu einer Abzweigung 25 führt. Die Abzweigung 25 ist über ein Druckbegrenzungsventil 27 mit dem Tank 3 verbunden. Das Druckbegrenzungsventil 27 kann bei Überdruck in Richtung des Tanks 3 öffnen. Außerdem geht von der Abzweigung 25 eine Leitung 29 aus, die über einen Druckfilter 31 zu einem Anschluss 33 eines Schaltventils 35 führt.

Der Druckfilter 31 ist durch einen Bypass 37 überbrückbar, wobei in dem Bypass 37 ein Differenzdruckventil 39 angeordnet ist, welches bei Überdruck eine Überbrückung des Filters 31 in Richtung auf den Anschluss 33 ermöglicht. Ein Öffnen des Differenzdruckventils 39 erfolgt ab einem vorgegebenen Differenzdruck über den Druckfilter 31.

Das Schaltventil 35 ist als 5/2-Wegeventil ausgebildet, welches außer dem Anschluss 33 vier weitere Anschlüsse 41, 43, 45, 47 aufweist. In einem ersten, in Figur 1 dargestellten Schaltzustand des Schaltventils 35 ist der Anschluss 33 mit dem Anschluss 41 verbunden, während die weiteren Anschlüsse 43, 45 und 47 blind, also geschlossen, geschaltet sind. Der Anschluss 41 mündet in eine Leitung 49, in der ein Rückschlagventil 51 angeordnet ist. Die Leitung 49 führt zu einem Druckspeicher 53, wobei vor dem Druckspeicher 53 eine Druckerfassungseinrichtung 55 mit der Leitung 49 hydraulisch verbunden ist.

In einem zweiten, aus der Figur 1 entnehmbaren Schaltzustand des Schaltventils 35 ist der Anschluss 33 mit dem Anschluss 43 verbunden, der in eine Leitung 57 mündet, die zu einem Hydraulikteilkreis 59 führt, der insbesondere der Kühlung von Kupplungen des Doppelkupplungsgetriebes dient. In diesem zweiten Schaltzustand ist der Anschluss 41 blind geschaltet und der Anschluss 45 ist mit dem Anschluss 47 verbunden. Dabei mündet in den Anschluss 45 eine Leitung 61, die mit dem Druck des Hydraulikmediums im Druckspeicher 53 beaufschlagt ist. Der Anschluss 47 mündet in eine Leitung 63, die mit einer ersten Ventilfläche 65 des Schaltventils 35 hydraulisch verbunden ist. Eine zweite Ventilfläche 67 des Schaltventils 35 ist über eine Leitung 69 permanent mit dem Druck des Druckspeichers 53 beaufschlagt.

Von der Leitung 49 zweigt an einer Abzweigung 71 eine Leitung 73 ab, von der wiederum in einer Abzweigung 75 die Leitung 61 und in einer Abzweigung 77 die Leitung 69 abzweigt. Die Abzweigung 71 ist auf der dem Schaltventil 35 abgewandten Seite des Rückschlagventils 51 an diesem angeschlossen.

Die Leitung 73 mündet in einer Abzweigung 79, von der Leitungen 81, 83 und 85 ausgehen.

Die Leitung 81 führt in einen Teilgetriebekreis 87 zur Versorgung eines ersten Teilgetriebes. Das erste Teilgetriebe weist eine Kupplung K1 auf. Die Leitung 81 mündet in einen Anschluss 89 eines Schaltventils 91, das als 3/2-Wegeventil ausgebildet ist, und als Sicherheitsventil für die Kupplung K1 dient. In einem ersten, dargestellten Schaltzustand des Schaltventils 91 ist der Anschluss 89 mit einem Anschluss 93 hydraulisch verbunden, während ein Anschluss 95 des Schaltventils 91 blind geschaltet ist. In einem zweiten, der Figur 1 entnehmbaren Schaltzustand des Schaltventils 91 ist der Anschluss 93 mit dem Anschluss 95 und über diesen mit dem Tank 3 verbunden, während der Anschluss 89 blind geschaltet ist. Wie im Folgenden deutlich wird, wird in diesem zweiten Schaltzustand die Kupplung K1 drucklos geschaltet.

Der Anschluss 93 ist mit einer Leitung 97 und über diese mit einem Anschluss 99 eines Druckregelventils 101 verbunden. Das Druckregelventil 101 ist als 3/2-Wege-Proportionalventil ausgebildet, das einen Anschluss 103 aufweist, der über eine Leitung 105 mit der Kupplung K1 verbunden ist. Das Druckregelventil 101 weist ferner einen Anschluss 107 auf, der mit dem Tank 3 verbunden ist. In einem ersten Extremalzustand des Druckregelventils 101 ist der Anschluss 99 mit dem Anschluss 103 verbunden, während der Anschluss 107 blind geschaltet ist. In diesem Fall wirkt der volle, in der Leitung 97 herrschende Druck des Hydraulikmediums auf die Kupplung K1. In einem zweiten Extremalzustand ist der Anschluss 103 mit dem Anschluss 107 verbunden, so dass die Kupplung K1 drucklos ist. Durch proportionale Variation zwischen diesen Extremalzuständen regelt das Druckregelventil 101 in an sich bekannter Weise den in der Kupplung K1 herrschenden Druck. Von der Kupplung K1 führt eine Leitung 109 über ein Rückschlagventil 111 zurück zur Leitung 97. Falls der Druck in der Kupplung K1 über den Druck in der Leitung 97 steigt, öffnet das Rückschlagventil 111, wodurch eine hydraulische Verbindung zwischen der Kupplung K1 über die Leitung 109 mit der Leitung 97 freigegeben wird. Von der Leitung 109 zweigt in einer Abzweigung 113 eine Leitung 115 ab, die den Druck in der Kupplung K1 als Regelgröße an das Druckregelventil 101 zurückgibt.

In der Leitung 105 ist eine Abzweigung 117 vorgesehen, durch die eine Druckerfassungseinrichtung 119 hydraulisch wirkverbunden ist. Auf diese Weise wird der in der Kupplung K1 herrschende Druck durch die Druckerfassungseinrichtung 119 erfasst.

Das Schaltventil 91 wird von einem Pilotventil 121 angesteuert. Dieses wird durch einen elektrischen Aktor 123 betätigt. Es ist als 3/2-Wegeventil ausgebildet und umfasst die Anschlüsse 125, 127 und 129. Der Anschluss 125 ist über eine Leitung 131 mit einer in der Leitung 81 vorgesehenen Abzweigung 133 verbunden. Der Anschluss 127 ist über eine Leitung 135 mit einer Ventilfläche 137 des Schaltventils 91 verbunden. In einem ersten, hier dargestellten Schaltzustand des Pilotventils 121 ist der Anschluss 125 blind geschaltet, während der Anschluss 127 mit dem Anschluss 129 und über diesen mit dem Tank 3 verbunden ist, wodurch die Ventilfläche 137 des Schaltventils 91 über die Leitung 135 drucklos geschaltet ist. Vorzugsweise nimmt das Pilotventil 121 diesen Schaltzustand ein, wenn kein elektrisches Steuersignal an dem Aktor 123 anliegt. In einem zweiten einnehmbaren Schaltzustand des Pilotventils 121 ist der Anschluss 125 mit dem Anschluss 127 verbunden, während der Anschluss 129 blind geschaltet ist. In diesem Fall wirkt der in der Leitung 81 herrschende Druck über die Abzweigung 133, die Leitung 131 und die Leitung 135 auf die Ventilfläche 137 des Schaltventils 91, wodurch dieses entgegen einer Vorspannkraft in seinen zweiten Schaltzustand geschaltet wird, in dem der Anschluss 93 mit dem Anschluss 95 hydraulisch verbunden ist, so dass die Kupplung K1 drucklos geschaltet wird. Vorzugsweise kann also durch elektrische Ansteuerung des Pilotventils 121 das Schaltventil 91 so betätigt werden, dass die Kupplung K1 drucklos geschaltet und damit geöffnet ist.

Die von der Abzweigung 79 ausgehende Leitung 83 dient der Versorgung einer Kupplung K2 eines Teilhydraulikkreises 139 eines zweiten Teilgetriebes. Die Ansteuerung der Kupplung K2 umfasst ebenfalls ein Schaltventil 91', ein Pilotventil 121' und ein Druckregelventil 101'. Die Funktionsweise ist die gleiche, die bereits in Zusammenhang mit der ersten Kupplung K1 beschrieben wurde. Aus diesem Grund wird auf die entsprechende Beschreibung zum Teilgetriebekreis 87 verwiesen. Die hydraulische Ansteuerung der Kupplung K2 entspricht derjenigen der Kupplung K1.

Die von der Abzweigung 79 ausgehende Leitung 85 ist mit einem Druckregelventil 141 verbunden, über das der Druck des Hydraulikmediums in einer Leitung 143 regelbar ist. Die Funktionsweise des Druckregelventils 141 entspricht vorzugsweise der Funktionsweise der Druckregelventile 101, 101', so dass hier eine erneute Beschreibung nicht notwendig ist. Die Leitung 143 ist mit einer Abzweigung 145 verbunden, von der eine Leitung 147 und eine Leitung 149 ausgehen. In der Leitung 149 ist eine Abzweigung 151 vorgesehen, von der eine Leitung 153 ausgeht, über die der in der Leitung 149 und damit der in der Leitung 143 herrschende Druck als Regelgröße an das Druckregelventil 141 zurückgegeben wird. Es ist offensichtlich, dass die Abzweigung 151 auch in den Leitungen 151 oder 147 vorgesehen sein kann.

Die Leitung 147 dient der Versorgung von Gangstellerzylindern 155 und 157 in dem Teilgetriebekreis 87, die als zwei doppeltwirkende Zylinder, insbesondere als Gleichlaufzylinder oder als Differentialzylinder, ausgebildet sind.

Zur hydraulischen Ansteuerung des Gangstellerzylinders 155 ist ein Volumensteuerventil 159 vorgesehen, das als 4/3-Wege-Proportionalventil ausgebildet ist. Es weist vier Anschlüsse 161, 163, 165 und 167 auf. Der erste Anschluss 161 ist mit der Leitung 147 verbunden, der zweite Anschluss 163 ist mit einer ersten Kammer 169 des Gangstellerzylinders 155 verbunden, der dritte Anschluss 165 ist mit einer zweiten Kammer 171 des Gangstellerzylinders 155 verbunden und der vierte Anschluss 167 ist mit dem Tank 3 verbunden. In einem ersten Extremalzustand des Volumensteuerventils 159 ist der erste Anschluss 161 mit dem zweiten Anschluss 163 verbunden, während der dritte Anschluss 165 mit dem vierten Anschluss 167 verbunden ist. In diesem Fall kann Hydraulikmedium von der Leitung 147 in die erste Kammer 169 des Gangstellerzylinders 155 fließen, während die zweite Kammer 171 über die Anschlüsse 165, 167 zum Tank 3 hin drucklos geschaltet ist. Auf diese Weise wird ein Kolben 173 des Gangstellerzylinders 155 in eine erste Richtung bewegt, um beispielsweise einen bestimmten Gang des Doppelkupplungsgetriebes aus- beziehungsweise einen anderen bestimmten Gang einzulegen.

In einem zweiten Extremalzustand des Volumensteuerventils 159 werden sowohl der Anschluss 163 als auch der Anschluss 165 mit dem Anschluss 167 verbunden, wobei der Anschluss 161 blind geschaltet wird. Auf diese Weise sind beide Kammern 169, 171 des Gangstellerzylinders 155 mit dem Tank 3 verbunden, so dass sie drucklos geschaltet sind. Der Kolben 173 des Gangstellzylinders 155 verharrt dann in seiner momentanen Position, weil keine Kräfte auf ihn wirken.

In einem dritten Extremalzustand des Volumensteuerventils 159 ist der Anschluss 161 mit dem Anschluss 165 verbunden und der Anschluss 163 mit dem Anschluss 167. In diesem Fall fließt Hydraulikmedium von der Leitung 147 in die zweite Kammer 171 des Gangstellenzylinders 155 und die erste Kammer 169 wird über den Anschluss 163 und den Anschluss 167 zum Tank 3 hin drucklos geschaltet. Das Hydraulikmedium übt dann eine Kraft auf den Kolben 173 des Gangstellerzylinders 155 derart aus, dass er in eine zur ersten Richtung entgegengesetzte zweite Richtung verlagert wird. Auf diese Weise kann der zuvor erwähnte bestimmte andere Gang aus- beziehungsweise der erwähnte bestimmte Gang eingelegt werden.

Wie bereits beschrieben, ist das Volumensteuerventil 159 als Proportionalventil ausgebildet. Der von der Leitung 147 kommende Hydraulikmedienstrom wird durch Variation der Ventilzustände zwischen den drei Extremalzuständen auf die Kammern 169, 171 aufgeteilt, so dass es möglich ist, durch Steuerung/Regelung des Volumenstroms eine definierte Geschwindigkeit für den Ein- beziehungsweise Auslegevorgang eines Gangs vorzugeben.

Von der Leitung 147 zweigt in einer Abzweigung 175 eine Leitung 177 ab, die in ein Volumensteuerventil 179 mündet, welches der Ansteuerung des Gangstellerzylinders 157 dient. Die Funktionsweise der hydraulischen Ansteuerung des Gangstellzylinders 157 ist die gleiche, die in Zusammenhang mit dem Gangstellerzylinder 155 beschrieben wurde. Eine erneute Beschreibung ist daher nicht notwendig.

Die Leitung 149 dient der Versorgung von Gangsstellerzylindern 155' und 157' des zweiten Teilgetriebes im Teilgetriebekreis 139. Auch zu deren Ansteuerung sind Volumensteuerventile 159' und 179' vorgesehen. Die Teilgetriebekreise 87 und 139 sind bezüglich der Ansteuerung der Gangsstellerzylinder 155, 155' beziehungsweise 157, 157' identisch ausgebildet, so dass auf die vorangegangene Beschreibung verwiesen wird.

Der Auslass der Pumpe 9 ist mit einer Leitung 181 verbunden, die zu dem Hydraulikteilkreis 59 führt, welcher vorzugsweise insbesondere der Kühlung der Kupplungen K1, K2 dient. Die Leitung 181 führt über einen Kühler 183 zu einem Volumensteuerventil 185. Hinter dem Auslass der Pumpe 9 und vor dem Kühler 183 ist eine Abzweigung 187 in der Leitung 181 vorgesehen, von der eine Leitung 189 abzweigt, die über ein in Richtung auf den Tank 3 öffnendes Druckbegrenzungsventil 191 zum Tank 3 führt. Hinter der Abzweigung 187 und vor dem Kühler 183 ist eine Abzweigung 193 vorgesehen, in die die Leitung 57 mündet, die von dem Schaltventil 35 kommt und mit dessen Anschluss 43 verbunden ist. Über die Leitung 57 ist es möglich, den Hydraulikteilkreis 59 mit von der Pumpe 7 gefördertem Hydraulikmedium zu versorgen, wenn sich das Schaltventil 35 in seinem zweiten Schaltzustand befindet. Außerdem zweigt von der Abzweigung 193 ein Bypass 195 ab, der ein Differenzdruckventil 197 aufweist und zum Kühler 183 parallel liegt. Das Differenzdruckventil 197 gibt bei Überdruck den Bypass in Richtung auf das Volumensteuerventil 185 frei. Auf diese Weise kann der Kühler 183 überbrückt werden.

Das Volumensteuerventil 185 ist als 4/3-Wege-Proportionalventil ausgebildet, das Anschlüsse 199, 201, 203, 205 und 207 aufweist. Der Anschluss 199 ist mit der Leitung 181 über den Kühler 183 beziehungsweise das Differenzdruckventil 197 verbunden, ebenso wie der Anschluss 201, der über eine Leitung 209 und eine Abzweigung 211 mit der Leitung 181 verbunden ist. Die Anschlüsse 199 und 201 bilden also, da sie beide mit der Leitung 181 stromabwärts des Kühlers 183 verbunden sind, einen gemeinsamen Anschluss des Volumensteuerventils 185. Nur aus Übersichtlichkeitsgründen sind zwei Anschlüsse 199, 201 gezeichnet, tatsächlich ist jedoch nur ein Anschluss, beispielsweise 199 oder 201, für die Leitung 181 an dem Volumensteuerventil 185 vorgesehen, wobei gemäß einem nicht beanspruchten Ausführungsbeispiel das Volumensteuerventil 185 auch tatsächlich mit den zwei getrennten Anschlüssen 199, 201 als 5/3-Wege-Proportionalventil ausgebildet sein kann. Der Anschluss 203 ist mit einer Leitung 213 verbunden, die über einen Druckfilter 215 zum Tank 3 führt. Der Druckfilter 215 ist durch einen Bypass 217 mit in Richtung auf den Tank 3 öffnende Differenzdruckventil 219 überbrückbar.

Der Anschluss 205 des Volumensteuerventils 185 ist mit einer Kühlung 221 insbesondere für die erste Kupplung K1 verbunden. Der Anschluss 207 ist mit einer zweiten Kühlung 223 insbesondere für die zweite Kupplung K2 verbunden.

In einem ersten, in der Figur 1 dargestellten Extremalzustand des Volumensteuerventils 185 ist der Anschluss 201 mit dem Anschluss 203 verbunden, während die Anschlüsse 199, 205 und 207 blind geschaltet sind. Der gesamte in der Hydraulikleitung 181 beziehungsweise durch den Kühler 183 strömende Hydraulikmedienstrom wird also über die Anschlüsse 201, 203 in die Leitung 213 und damit über den Druckfilter 215 in den Tank 3 geleitet.

In einem zweiten Extremalzustand sind die Anschlüsse 199 und 205 miteinander verbunden, während die Anschlüsse 201, 203 und 207 blind geschaltet sind. In diesem Zustand wird der gesamte am Volumensteuerventil 185 ankommende Hydraulikmedienstrom der ersten Kühlung 221 zugeführt.

In einem dritten Extremalzustand des Volumensteuerventils 185 sind die Anschlüsse 199 und 207 miteinander verbunden. Die Anschlüsse 201, 203 und 205 sind blind geschaltet. In diesem Zustand wird demnach der gesamte in der Leitung 181 fließende Hydraulikmedienstrom der zweiten Kühlung 223 zugeführt.

Wie bereits ausgeführt, ist das Volumensteuerventil 185 als Proportionalventil ausgebildet, so dass Zwischenzustände zwischen den beschriebenen Extremalzuständen eingestellt werden können, wodurch der Volumenstrom zu den Kühlungen 221, 223 beziehungsweise zum Druckfilter 215 regelbar ist. Es ist auch möglich, das Volumensteuerventil 185 getaktet zu betreiben, wobei jeweils kurzzeitig mindestens einer der drei Extremalzustände angenommen wird. Auch bei dieser Betriebsart wird im Zeitmittel der Volumenstrom gesteuert oder geregelt, der den Kühlungen 221, 223 beziehungsweise dem Druckfilter 215 und damit dem Tank 3 zugeleitet wird.

Die Figur 1 zeigt, dass zusätzlich zum in der Leitung 181 vorhandenen Hydraulikmediumstrom ein Hydraulikmediumstrom der Leitung 57 treten und dem Hydraulikteilkreis 59 zugeführt werden kann. Alternativ ist es auch möglich, dass nur die Leitung 57 Hydraulikmedium einspeist. Zu erwähnen ist noch, dass die Proportionalventile 101, 101', 141, 159, 159', 179, 179', 185 jeweils insbesondere gegen Federkraft elektrisch proportional verstellbar sind.

Wie oben bereits ausgeführt, mündet die Leitung 57 in den Hydraulikteilkreis 59, genauer gesagt in die Leitung 181 stromabwärts der Pumpe 9. Gemäß einer alternativen, hier nicht dargestellten Ausführungsform mündet die Leitung 57 in die Leitung 181 bevorzugt stromabwärts des Kühlers 183. Durch die Zuführung des Hydraulikmediums aus dem Hochdruckkreis in den Hydraulikteilkreis 59 gemäß der alternativen Ausführungsform wird der Gesamtvolumenstrom durch den Kühler 183 reduziert. Durch den reduzierten Volumenstrom wird der Druckabfall über den Kühler 183 reduziert, wodurch die notwendige Antriebsenergie für die Pumpen 7 und/oder 9 verringert wird. Durch eine Reduktion der Rückstaudrücke wird also die für den Elektromotor 5 benötigte Antriebsenergie reduziert. Bei einer ausreichend hohen Reduktion der Rückstaudrücke beziehungsweise des Druckniveaus - unabhängig davon, wie die Reduktion erreicht wird - ist gemäß einer weiteren Ausführungsform vorgesehen, die Pumpe 9 mit dem Elektromotor 5 direkt zu verbinden, die dargestellte Trennkupplung 11 also zu entfernen.

Gemäß einer weiteren, hier nicht dargestellten Ausführungsform bezüglich der Anordnung des Druckfilters 215 ist vorgesehen, dass dieser nicht zwischen Volumensteuerventil 185 und Tank 3 in der Leitung 213, sondern vorzugsweise in der Leitung 181, insbesondere zwischen dem Kühler 183 und dem Volumensteuerventil 185, angeordnet ist. Vorzugsweise mündet dabei die Leitung 57 stromabwärts des Druckfilters 215 in die Leitung 181. Durch die alternative Anordnung des Druckfilters 215, der nunmehr im Hauptstrom des Hydraulikmediums liegt, werden die Zeitanteile erhöht, innerhalb derer das Hydraulikmedium durch den Druckfilter 215 gefiltert wird. Das Bypass-Ventil 219 wird dabei vorzugsweise auf einen minimalen Rückstaudruck über den Volumenstrom ausgelegt.

Alternativ zu der dargestellten und beschriebenen Ausführungsform des Volumensteuerventils 185 ist gemäß einer weiteren Ausführungsform vorgesehen, dass die Schaltstellungen vorzugsweise derart vertauscht sind, dass in dem ersten Extremalzustand die Anschlüsse 199 und/oder 201 mit dem Anschluss 205 oder 207 verbunden und die übrigen Anschlüsse des Volumensteuerventils 185 blind geschaltet sind, in dem zweiten Extremalzustand die Anschlüsse 201 und/oder 199 mit dem Anschluss 203 verbunden und die übrigen Anschlüsse blind geschaltet sind, und in dem dritten Extremalzustand die Anschlüsse 199 und/oder 201 mit dem Anschluss 207 oder 205 verbunden und die übrigen Anschlüsse blind geschaltet sind. Durch ein derartiges Vertauschen der Schaltstellungen wird vermieden, dass bei einem getakteten Ansteuern des Volumensteuerventils 185 zum Einstellen eines gewünschten Hydraulikmediumstroms für eine der Kupplungen K1 oder K2 ein Volumenstrom auch zur anderen Kupplung K2 beziehungsweise K1 fließt. Stattdessen wird der beim getakteten, nicht zur jeweiligen Kupplung K1 oder K2 geführte Volumenstrom in den Tank 3 geleitet. Bei der tatsächlichen Ausbildung des Volumensteuerventils 185 als 4/3-Wege-Proportionalventil sind die Anschlüsse 199 und 201 stets als gemeinsamer beziehungsweise einziger Anschluss der Leitung 181 an dem Volumensteuerventil 185 zu verstehen, so dass tatsächlich nur einer der beiden Anschlüsse 199, 201 an dem Volumensteuerventil 185 vorgesehen ist.

Durch das Vorsehen getrennter Kühlungen 221, 223 für die Kupplungen K1 und K2 können die Kupplungen K1 und K2 mittels des Volumensteuerventils 185 individuell gekühlt werden, wodurch die Regelgüte der Kupplungen verbessert wird. Darüber hinaus wird die Energieeffizienz des Hydraulikkreises erhöht, da die Kupplungen K1 und K2 nur bei Bedarf jeweils mit kühlendem Hydraulikmedium versorgt werden. Durch Einstellen der Drehzahl des Elektromotors 5 lässt sich die Steuergüte des Volumensteuerventils 185 weiter verbessern. Bei niedrigen Drehzahlen können sehr kleine Volumenströme genau gesteuert werden und bei hohen Drehzahlen können große Volumenströme genau gesteuert werden.

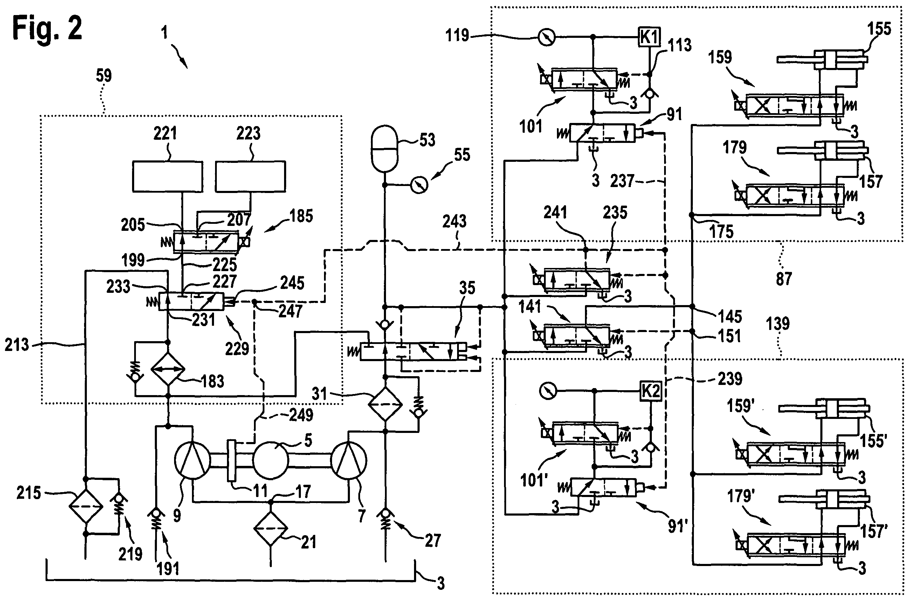

Figur 2 zeigt den Hydraulikkreis 1 gemäß einer zweiten nicht beanspruchten Ausführungsform. Aus der Figur 1 bekannte Elemente sind mit den gleichen Bezugszeichen versehen, sodass insofern auf die obenstehende Beschreibung verwiesen wird. Im Unterschied zu der vorhergehenden Ausführungsform ist das Volumensteuerventil 185 als 3/2-Wege-Ventil ausgebildet, wobei es lediglich die Anschlüsse 205, 207 und 199 umfasst. Der Anschluss 199 ist dabei durch eine Leitung 225 mit einem Anschluss 227 eines Schaltventils 229 verbunden, das als 3/2-Wege-Schaltventil ausgebildet ist. Als weitere Anschlüsse weist das Schaltventil 229 einen Anschluss 231 sowie einen Anschluss 233 auf, wobei der Anschluss 231 mit der Leitung 181 stromabwärts des Kühlers 183 und der Anschluss 233 mit der Leitung 213 verbunden ist. Das Schaltventil 229 leitet somit in einem ersten - dargestellten - Schaltzustand den von dem Kühler 183 kommenden Hydraulikmediumstrom über die Leitung 213 durch den Druckfilter 215 in den Tank 3. In einem zweiten Schaltzustand leitet das Schaltventil 229 das Hydraulikmedium zu dem Volumensteuerventil 185, welches die Kühlungen K1 und K2 bedarfsgerecht mit Hydraulikmedium - wie oben beschrieben, gemäß dem zweiten und dritten Extremalzustand - versorgt. Die zweite Ausführungsform erlaubt eine höhere Volumensteuergüte und eine höhere Dynamik der Volumensteuerung. Darüber hinaus wird der Rückstaudruck über den Volumenstrom verringert und damit ein höherer Volumendurchsatz und bessere Energieeffizienz geboten. Das Schaltventil 229 kann mittels eines elektromotorischen oder elektromagnetischen Aktors betätigt werden, oder, wie dargestellt, als druckgeregeltes Schaltventil 229 ausgebildet sein.

Ein weiterer Unterschied der zweiten Ausführungsform zu der ersten Ausführungsform liegt darin, dass anstelle der zwei Pilotventilen 121,121' ein gemeinsames Pilotventil 235 vorgesehen ist, das über Leitungen 237,239 mit den Ventilflächen 137 der Schaltventile 91,91' verbunden ist. Die Leitungen 237 und 239 sind dabei über eine Abzweigung 241 mit einem Anschluss des Pilotventils 235 verbunden. Von der Abzweigung 241 führt eine weitere Leitung 243 zu einer Ventilfläche 245 des Schaltventils 229, sowie über eine Abzweigung 247 und eine Leitung 249 zu dem Trennelement 11. Das Pilotventil 235 ist dabei als 3/2-Wege-Proportionalventil ausgebildet. Somit lässt sich der Schaltzustand des Schaltventils 229 mittels des durch das Pilotventil 235 einstellbaren Drucks, insbesondere in der Leitung 243, in den gewünschten Schaltzustand bringen.

### BEZUGSZEICHENLISTE

- 1: Hydraulikkreis
- 3: Tank
- 5: Elektromotor
- 7: Pumpe
- 9: Pumpe
- 11: Trennelement
- 13: Leitung
- 15: Leitung
- 17: Abzweigung
- 19: Leitung
- 21: Saugfilter
- 23: Leitung
- 25: Abzweigung
- 27: Druckbegrenzungsventil
- 29: Leitung
- 31: Druckfilter
- 33: Anschluss
- 35: Schaltventil
- 37: Bypass
- 39: Differenzdruckventil
- 41: Anschluss
- 43: Anschluss
- 45: Anschluss
- 47: Anschluss
- 49: Leitung
- 51: Rückschlagventil
- 53: Druckspeicher
- 55: Druckerfassungseinrichtung
- 57: Leitung
- 59: Hydraulikteilkreis
- 61: Leitung
- 63: Leitung
- 65: erste Ventilfläche
- 67: zweite Ventilfläche
- 69: Leitung
- 71: Abzweigung
- 73: Leitung
- 75: Abzweigung
- 77: Abzweigung
- 79: Abzweigung
- 81: erste Leitung
- 83: zweite Leitung
- 85: dritte Leitung
- 87: Teilgetriebekreis
- 89: Anschluss
- 91: Schaltventil
- 91': Schaltventil
- 93: Anschluss
- 95: Anschluss
- 97: Leitung
- 101: Druckregelventil
- 101': Druckregelventil
- 103: Anschluss
- 105: Leitung
- 107: Anschluss
- 109: Leitung
- 111: Rückschlagventil
- 113: Abzweigung
- 115: Leitung
- 117: Abzweigung
- 119: Druckerfassungseinrichtung
- 121: Pilotventil
- 123: Ansteuerung
- 125: Anschluss
- 127: Anschluss
- 129: Anschluss
- 131: Leitung
- 133: Abzweigung
- 135: Leitung
- 137: Ventilfläche
- 139: Teilgetriebekreis
- 141: Druckregelventil
- 143: Leitung
- 145: Abzweigung
- 147: Leitung
- 149: Leitung
- 151: Abzweigung
- 153: Leitung
- 155: Gangstellerzylinder
- 157: Gangstellerzylinder
- 159: Volumensteuerventil
- 159': Volumensteuerventil
- 161: Anschluss
- 163: Anschluss
- 165: Anschluss
- 167: Anschluss
- 169: erste Kammer
- 171: zweite Kammer
- 173: Kolben
- 175: Abzweigung
- 177: Leitung
- 179: Volumensteuerventil
- 179': Volumensteuerventil
- 181: Leitung
- 183: Kühler
- 185: Volumensteuerventil
- 187: Abzweigung
- 189: Leitung
- 191: Druckbegrenzungsventil
- 193: Abzweigung
- 195: Bypass
- 197: Differenzdruckventil
- 199: Anschluss
- 201: Anschluss
- 203: Anschluss
- 205: Anschluss
- 207: Anschluss
- 209: Leitung
- 211: Abzweigung
- 213: Leitung
- 215: Druckfilter
- 217: Bypass
- 219: Differenzdruckventil
- 221: Kühlung
- 223: Kühlung
- 225: Leitung
- 227: Anschluss
- 229: Schaltventil
- 231: Anschluss
- 233: Anschluss
- 235: Pilotventil
- 237: Leitung
- 239: Leitung
- 241: Abzweigung
- 243: Leitung
- 245: Ventilfläche
- 247: Abzweigung
- 249: Leitung
- K1: Kupplung
- K2: Kupplung

## Patentansprüche

1. Doppelkupplungsgetriebe, insbesondere eines Kraftfahrzeugs, mit einem Hydraulikkreis (1) zur Kühlung des Doppelkupplungsgetriebes, wobei der Hydraulikkreis (1) wenigstens eine Pumpe (7,9) zum Fördern eines Hydraulikmediumstroms, wenigstens einen Kühler (183) zum Kühlen des Hydraulikmediumstroms, und ein Volumensteuerventil (185) zum Einstellen des Hydraulikmediumstroms für mindestens eine Kupplungen (K1,K2) des Doppelkupplungsgetriebes zugeordnete Kühlung (221,223) umfasst, **dadurch gekennzeichnet, dass** das Volumensteuerventil (185) als 4/3-Wege-Ventil, insbesondere als 4/3-Wege-Proportionalventil, ausgebildet ist und in einer ersten Schaltstellung einer einer ersten der Kupplungen (K1) zugeordneten ersten Kühlung (221), in einer zweiten Schaltstellung den Hydraulikmediumstrom einem das Hydraulikmedium bereitstellenden Tank und in einer dritten Schaltstellung einer einer zweiten der Kupplungen (K2) zugeordneten zweiten Kühlung (223) zuführt.

2. Doppelkupplungsgetriebe nach Anspruch 1, **dadurch gekennzeichnet, dass** das Volumensteuerventil (185) elektromotorisch und/oder elektromagnetisch ansteuerbar ist.

3. Doppelkupplungsgetriebe nach einem der vorhergehenden Ansprüche, **dadurch gekennzeichnet, dass** die Pumpe (9) durch ein Trennelement (11), insbesondere eine betätigbare Kupplung oder ein Freilauf, mit einem Antrieb wirkverbunden ist.

4. Doppelkupplungsgetriebe nach dem Anspruch 3, **dadurch gekennzeichnet, dass** der Antrieb als Elektromotor (5), insbesondere als drehzahlgeregelter Elektromotor (5) ausgebildet ist.

5. Verfahren zum Betreiben eines Doppelkupplungsgetriebes nach einem oder mehreren der vorhergehenden Ansprüche, das einen Hydraulikkreis (1) zu seiner Kühlung aufweist, wobei mittels einer Pumpe (7,9) ein Hydraulikmediumstrom gefördert und mittels eines Kühlers (183) gekühlt wird, und wobei der Hydraulikmediumstrom für mindestens eine Kupplungen (K1,K2) des Doppelkupplungsgetriebes zugeordnete Kühlung (221,223) mittels eines Volumensteuerventils (185) eingestellt wird, **dadurch gekennzeichnet, dass** in Abhängigkeit vom Betriebszustand des Doppelkupplungsgetriebes der Hydraulikmediumstrom mittels des Volumensteuerventils (185), das als 4/3-Wege-Ventil ausgebildet ist, in wenigstens einer ersten Schaltstellung des Volumensteuerventils (185) einer einer ersten der Kupplungen (K1) zugeordneten ersten Kühlung (221), in einer zweiten Schaltstellung einem das Hydraulikmedium bereitstellenden Tank und in einer dritten Schaltstellung einer einer zweiten der Kupplungen (K2) zugeordneten zweiten Kühlung (223) zugeführt wird.

6. Verfahren nach Anspruch 5, **dadurch gekennzeichnet, dass** zum im Wesentlichen gleichzeitigen Bereitstellen des Hydraulikmediumstroms das Volumensteuerventil (185) getaktet angesteuert wird.

7. Verfahren nach einem der Ansprüche 5 oder 6, **dadurch gekennzeichnet, dass** die Drehzahl der das Hydraulikmedium zu dem Volumensteuerventil (185) fördernden Pumpe (7,9) in Abhängigkeit von einer gewünschten Kühlleistung eingestellt wird.

## Claims

1. Dual clutch transmission, in particular of a motor vehicle, comprising a hydraulic circuit (1) for cooling the dual clutch transmission, wherein the hydraulic circuit (1) includes at least one pump (7, 9) for conveying a hydraulic medium flow, at least one cooler (183) for cooling the hydraulic medium flow, and a volume control valve (185) for adjusting the hydraulic medium flow for at least one cooling system (221, 223) associated with clutches (K1, K2) of the dual clutch transmission, **characterised in that** the volume control valve (185) is constructed as a 4/3-way valve, in particular as a 4/3-way proportional valve, and conveys the hydraulic medium flow in a first switching position to a first cooling system (221) associated with a first of the clutches (K1), in a second switching position to a tank providing the hydraulic medium, and in a third switching position to a second cooling system (223) associated with a second of the clutches (K2).

2. Dual clutch transmission according to claim 1, **characterised in that** the volume control valve (185) can be controlled by an electric motor and/or electromagnetically.

3. Dual clutch transmission according to any one of the preceding claims, **characterised in that** the pump (9) is operatively connected to a drive by a separating element (11), in particular an actuatable clutch or an overrunning clutch.

4. Dual clutch transmission according to claim 3, **characterised in that** the drive is configured as an electric motor (5), in particular a speed-controlled electric motor (5).

5. Method for operating a dual clutch transmission according to one or more of the preceding claims with a hydraulic circuit (1) for cooling said dual clutch transmission, wherein a hydraulic medium flow is conveyed by means of a pump (7, 9) and cooled by means of a cooler (183), and wherein the hydraulic medium flow is adjusted for at least one cooling system (221, 223) associated with clutches (K1, K2) of the dual clutch transmission by means of a volume control valve (185), **characterised in that** depending on the operating state of the dual clutch transmission, the hydraulic medium flow is conveyed by means of the volume control valve (185), which is constructed as a 4/3-way valve, in at least a first switching position of the volume control valve (185) to a first cooling system (221) associated with a first of the clutches (K1), in a second switching position to a tank providing the hydraulic medium, and in a third switching position to a second cooling system (223) associated with a second of the clutches (K2).

6. Method according to claim 5, **characterised in that** the volume control valve (185) is controlled in a pulsed mode for substantially simultaneously providing the hydraulic medium flow.

7. Method according to any one of claims 5 or 6, **characterised in that** the speed of the pump (7,9) conveying the hydraulic medium to the volume control valve (185) is adjusted depending on a desired cooling power.

## Revendications

1. Transmission à double accouplement, en particulier d'un véhicule automobile, avec un circuit hydraulique (1) pour refroidir la transmission à double accouplement, dans laquelle le circuit hydraulique (1) comprend au moins une pompe (7, 9) pour acheminer un courant d'agent hydraulique, au moins un refroidisseur (183) pour refroidir le courant d'agent hydraulique et une vanne de commande de volume (185) pour régler le courant d'agent hydraulique pour au moins un refroidissement (221, 223) affecté aux accouplements (K1, K2) de la transmission à double accouplement, **caractérisé en ce que** la vanne de commande de volume (185) se présente sous la forme d'une vanne à 4/3 voies, en particulier une vanne proportionnelle à 4/3 voies, et alimente, dans une première position de commutation, un premier refroidissement (221) affecté à un premier des accouplements (K1), dans une deuxième position de commutation, le courant d'agent hydraulique à un réservoir d'approvisionnement en agent hydraulique et, dans une troisième position de commutation, un second refroidissement (223) affecté à un second des accouplements (K2).

2. Transmission à double accouplement selon la revendication 1, **caractérisé en ce que** la vanne de commande de volume (185) peut être commandée par voie électromotrice et/ou électromagnétique.

3. Transmission à double accouplement selon l'une quelconque des revendications précédentes, **caractérisé en ce que** la pompe (9) est raccordée par un élément de séparation (11), en particulier un accouplement manoeuvrable ou une roue libre, à une commande.

4. Transmission à double accouplement selon la revendication 3, **caractérisé en ce que** la commande se présente sous la forme d'un moteur électrique (5), en particulier d'un moteur électrique à vitesse de rotation réglée (5).

5. Procédé de commande d'une transmission à double accouplement selon une ou plusieurs des revendications précédentes, qui présente un circuit hydraulique (1) pour son refroidissement, dans lequel on achemine au moyen d'une pompe (7, 9) un courant d'agent hydraulique et on le refroidit à l'aide d'un refroidisseur (183) et dans lequel le courant d'agent hydraulique est réglé pour au moins un refroidissement (221, 223) affecté aux accouplements (K1, K2) de la transmission à double accouplement au moyen d'une vanne de commande de volume (185), **caractérisé en ce que,** en fonction de l'état de commande de la transmission à double accouplement, le courant d'agent hydraulique est alimenté au moyen de la vanne de commande de volume (185), qui se présente sous la forme d'une vanne à 4/3 voies, dans au moins une première position de commutation de la vanne de commande de volume (185), à un premier refroidissement (221) affecté à un premier des accouplements (K1), dans une deuxième position de commutation, à un réservoir d'approvisionnement en agent hydraulique et, dans une troisième position de commutation, à un second refroidissement (223) affecté à un second des accouplements (K2).

6. Procédé selon la revendication 5, **caractérisé en ce que,** à des fins d'approvisionnement sensiblement simultané du courant d'agent hydraulique, la vanne de commande de volume (185) est commandée de manière cadencée.

7. Procédé selon l'une quelconque des revendications 5 ou 6, **caractérisé en ce que** la vitesse de rotation de la pompe (7, 9) acheminant l'agent hydraulique à la vanne de commande de volume (185) est réglée en fonction d'une prestation de refroidissement souhaitée.
